(19) Europäisches Patentamt
European Patent Office
Office européen des brevets

(11) **EP 4 032 405 B1**

(12) **EUROPÄISCHE PATENTSCHRIFT**

(45) Veröffentlichungstag und Bekanntmachung des Hinweises auf die Patenterteilung:
**01.05.2024   Patentblatt 2024/18**

(21) Anmeldenummer: **21152913.6**

(22) Anmeldetag: **22.01.2021**

(51) Internationale Patentklassifikation (IPC):
***A01N 43/54*** *(2006.01)*       ***A01N 47/12*** *(2006.01)*
***A01P 3/00*** *(2006.01)*

(52) Gemeinsame Patentklassifikation (CPC):
(C-Sets verfügbar)
**A01N 43/54**                         (Forts.)

(54) **BIOZIDMISCHUNGEN**

BIOCIDE MIXTURES

MÉLANGES BIOCIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.07.2022   Patentblatt 2022/30**

(73) Patentinhaber: **LANXESS Deutschland GmbH 50569 Köln (DE)**

(72) Erfinder:
- **JAETSCH, Thomas
  50933 Köln (DE)**
- **MOEWS, Katrin
  44137 Dortmund (DE)**

(56) Entgegenhaltungen:
**WO-A1-2008/047097      JP-A- 2003 073 211**

- .: "Technical Datasheet: DRYGOLIN Pluss Oljedekkbeis", , 3. November 2020 (2020-11-03), Seiten 1-5, XP055811001, Sandefjord, Norway Gefunden im Internet: URL:https://www.jotun.com/Datasheets/Download?url=/TDS/TDS__28421__DRYGOLIN+Pluss+ol jedekkbeis__Nor__NO.pdf [gefunden am 2021-06-07]
- .: "Sikkerhetsdatablad: DRYGOLIN Pluss Oljedekkbeis", , 21. Mai 2021 (2021-05-21), Seiten 1-12, XP055811009, Sandefjord, Norway Gefunden im Internet: URL:https://www.jotun.com/Datasheets/Download?url=/SDS/SDS__28421__DRYGOLIN%20Plu ss% 20oljedekkbeis__Nor__NO.pdf [gefunden am 2021-06-07]

(52) Gemeinsame Patentklassifikation (CPC): (Forts.)

    C-Sets
    **A01N 43/54, A01N 47/12**

## Beschreibung

Die Erfindung betrifft spezielle Biozidmischungen, enthaltend IPBC und Azoxystrobin, ihre Herstellung, diese enthaltende Beschichtungsmittel sowie deren nicht-therapeutische Verwendung zum Hemmen oder Bekämpfen des Wachstums von Schimmelpilzen auf oder in Oberflächenbeschichtungen. Aus US-A-4276211 ist bereits der Einsatz von IPBC (3-Iodpropynyl-N-butylcarbamat) in Beschichtungsmittelzusammensetzungen zum Schutz vor Befall durch Schimmelpilzen bekannt. Die Verwendung von IPBC allein hat aber noch Nachteile.

Zur Verbesserung des Wirkspektrums bei Schimmelpilzen von Beschichtungsmittel-Präparationen war es daher angezeigt nach einer wirkungsvolleren Lösung zu suchen. So wird in EP-A-431752 beispielsweise IPBC mit DCOIT (4,5-Dichlor-2-n-octyl-4-isothiazolin-3-on) als Mischungspartner kombiniert (siehe dortige Tabelle 1), um dieses Ziel zu erreichen. DCOIT gilt es aber mittlerweile in immer mehr Anwendungsbereichen zu vermeiden, so dass alternative Mischungspartner für eine verbesserte Wirkung gegenüber dem Einzelwirkstoff IPBC zu suchen waren.

Andere Mischungen von IPBC sind beispielsweise solche mit speziellen Strobilurinen, wie dem Kresoxim-Methyl, die für holzzerstörende Pilze bereits in den Beispielen der JP-A-2003073211 beschrieben sind. Jedoch weist eine solche Mischung für andere Anwendungen, insbesondere dem Einsatz in wässrigen Beschichtungsmitteln wie Anstrichfarben, zum Zwecke des Filmschutzes gegen Schimmelpilze wie den Ascomyceten und Deuteromyceten, noch Nachteile auf.

Die Aufgabe der vorliegenden Erfindung war es daher, verbesserte Biozidmischungen zu finden, die sich insbesondere für den Einsatz in wässrigen Beschichtungsmitteln wie Anstrichfarben, zum Zwecke des Filmschutzes gegen Schimmelpilze wie den Ascomyceten und Deuteromyceten eignen.

## Biozidmischung

Überraschenderweise wurde eine Biozidmischung gefunden, enthaltend die Biozide

a) Azoxystrobin (Methyl-(E)-2-{2-[6-(2-cyanophenoxy)pyrimidin-4-yloxyl]phenyl}-3-methoxyacrylat) oder im Folgenden auch als AZO abgekürzt und
b) IPBC,

wobei das Gew.-Verhältnis der Komponenten a) zu b) von 6:1 - 1: 6, vorzugsweise von 1,8:1 - 1:6, insbesondere von 1,5:1 - 1:6 beträgt.

In einer bevorzugten Ausführungsform enthält die erfindungsgemäße Biozidmischung die beiden Komponenten a) und b) in Summe zu mehr als 90 Gew.-%, insbesondere zu mehr als 95 Gew.-% und besonders bevorzugt zu mehr als 99 Gew.-%, bezogen auf die Summe aller Biozide. Als bevorzugte ggf. mitzuverwendende Biozide sind beispielsweise Gebindekonservierungsmittel wie OIT (2-Octyl-2H-isothiazol-3-on) und/oder BIT (1,2-Benzothiazol-3-on) zu nennen, deren Anteil in Summe vorzugsweise kleiner 5, vorzugsweise kleiner 1 Gew.-% an der Biozidmischung, bezogen auf die Summe der Biozide beträgt.

Die erfindungsgemäße Biozidmischung kann gegebenenfalls weiterhin verschiedene Hilfsstoffe wie grenzflächenaktive Stoffe, Entschäumer, Benetzungsmittel, Emulgatoren, Dispergiermittel, Stabilisatoren, Haftmittel, Schutzkolloide, Spreitmittel, Duftstoffe, Farbstoffe, Puffersubstanzen, Puffersysteme, pH-Wert-Regulatoren, Verdickungsmittel, Entstaubungsmittel, Fließmittel, Trennmittel, Gebindekonservierungsmittel oder Mischungen davon enthalten. Für die nachstehend genannten Hilfsstoffe besteht jeweils unabhängig voneinander auch die Möglichkeit, dass sie nicht enthalten sind. Die Mengenangaben sind jeweils auf die Biozid-Mischung angegeben. Mögliche Hilfsstoffe sind beispielsweise:

- Grenzflächenaktive Stoffe, wie beispielsweise Tenside. Tenside können beispielsweise nichtionische, kationische und amphotere Tenside, vorzugsweise anionische Tenside sein. Anionische Tenside sind beispielsweise Alkylsulfate, Alkylethersulfate, Alkylarylsulfonate, Alkylsuccinate, Alkylsulfosuccinate, N-Alkoyl-sarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, zum Beispiel Natrium-, Kalium-, Magnesium-, Calcium-, sowie Ammonium- und Triethanolamin-Salze. Die Alkylethersulfate, Alkyletherphosphate und Alkylethercarboxylate können jeweils beispielsweise von 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat, Triethanolamindodecylbenzolsulfonat. Bezogen auf die Biozidmischungen können die grenzflächenaktiven Stoffe dabei beispielsweise von 0,01 bis 10 Gew.-%, vorzugsweise von 0,2 bis 8 Gew.-%, besonders bevorzugt von 0,3 bis 5 Gew.-% und ganz besonders bevorzugt von 0,5 bis 3 Gew.-% enthalten sein.

- Entschäumer. Als Entschäumer werden im Allgemeinen grenzflächenaktive Stoffe eingesetzt, die in der tensidischen Lösung nur schwach löslich sind. Bevorzugte Entschäumer sind solche, die sich von natürlichen Fetten und Ölen, Petroleum-Derivaten oder Siliconölen ableiten. Bezogen auf die Biozidmischungen können die Entschäumer dabei beispielsweise von 0,01 bis 5 Gew.-%, vorzugsweise von 0,05 bis 3 Gew.-%, besonders bevorzugt von 0,1 bis 1,5 Gew.-% enthalten sein.

- Benetzungsmittel, wie beispielsweise Alkali-, Erdalkali-, Ammoniumsalze von aromatischen Sulfonsäuren, zum Beispiel Lignin-, Phenol-, Naphthalin- und Dibutylnaphthalinsulfonsäure, sowie von Fettsäuren, Alkyl-und Alkylarylsulfonaten, Alkyl-, Laurylether- und Fettalkoholsulfaten, sowie Salze sulfatierter Hexa-, Hepta-und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Tris-sterylphenyletherethoxylate, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose. Bezogen auf die Biozid-Mischungen können die Benetzungsmittel dabei beispielsweise von 0,01 bis 8 Gew.-%, vorzugsweise von 0,2 bis 6 Gew.-%, besonders bevorzugt von 0,3 bis 5 Gew.-% und ganz besonders bevorzugt von 0,5 bis 3 Gew.-% enthalten sein.

- Emulgatoren, wie beispielsweise Natrium-, Kalium- und Ammoniumsalze von gradkettigen aliphatischen Carbon-säuren der Kettenlänge $C_{10}$-$C_{20}$, Natriumhydroxyoctadecansulfonat, Natrium-, Kalium-und Ammoniumsalze von Hydroxyfettsäuren der Kettenlänge $C_{10}$-$C_{20}$ und deren Sulfierungs- bzw. Acetylierungsprodukte, Alkylsulfate, auch als Triethanolaminsalze, Alkyl-($C_{10}$-$C_{20}$)-sulfonate, Alkyl-($C_{10}$-$C_{20}$)-arylsulfonate, Dimethyldialkyl-($C_8$-$C_{18}$)-ammo-niumchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge $C_4$-$C_{16}$, Sulfobernsteinsäure-4-Ester mit Polyethylenglykolethern von einwertigen aliphatischen Alkoholen der Kettenlänge $C_{10}$-$C_{12}$ (Di-Natrium-salz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium- und Ammoniumsalze, Polyoxyethylen-sorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd, vorzugsweise mit einem Mindestgehalt von 10 Gew.-% Ethylenoxid. Vorzugsweise werden als Emulgatoren verwendet: Natriumlaurylsulfat, Natrium-laurylethersulfat, ethoxyliert (3 Ethylenoxidgruppen); die Polyethylenglykol(4-20)ether des Oleylalkohols sowie die Polyethenoxid-(4-14)ether von Nonylphenol. Bezogen auf die Biozidmischungen können die Emulgatoren dabei beispielsweise von 0,01 bis 15 Gew.-%, vorzugsweise von 0,02 bis 8 Gew.-%, besonders bevorzugt von 0,05 bis 6 Gew.-% und ganz besonders bevorzugt von 0,1 bis 5 Gew.-% enthalten sein.

- Dispergiermittel, wie beispielsweise Alkylphenolpolyglycolether, Polyacrylate, und polymere Carboxylate. Bezogen auf die Biozidmischungen können die Dispergiermittel dabei beispielsweise von 0,01 bis 15 Gew.-%, vorzugsweise von 0,02 bis 8 Gew.-%, besonders bevorzugt von 0,05 bis 6 Gew.-% und ganz besonders bevorzugt von 0,1 bis 5 Gew.-% enthalten sein.

- Stabilisatoren, wie beispielsweise Cellulose und Cellulosederivate sowie Antioxidantien, Radikalfänger oder UV-Absorber. Bezogen auf die Biozidmischungen können die Stabilisatoren dabei beispielsweise von 0,01 bis 6 Gew.-%, vorzugsweise von 0,01 bis 3 Gew.-%, besonders bevorzugt von 0,01 bis 2 Gew.-% und ganz besonders bevorzugt von 0,01 bis 1 Gew.-% an enthalten sein.

- Haftmittel und/oder Schutzkolloide, wie beispielsweise Carboxymethylcellulose, Polyvinylpyrrolidone und deren Derivate, natürliche und synthetische pulvrige, körnige oder latexförmige Polymere, Polyvinylalkohol, Polyvinylacetat, sowie natürliche Phospholipide, wie Kephaline und Lecithine und synthetische Phospholipid sowie Paraffinöle. Bezogen auf die Biozidmischungen können die Haftmittel und/oder Schutzkolloide dabei beispielsweise von 0,01 bis 8 Gew.-%, vorzugsweise von 0,05 bis 4 Gew.-%, besonders bevorzugt von 0,2 bis 3 Gew.-% und ganz besonders bevorzugt von 0,2 bis 2 Gew.-% enthalten sein.

- Spreitmittel, wie beispielsweise Isopropylmyristat Polyoxyethylen-nonylphenylether und Polyoxyethylenlaurylphenylether. Bezogen auf die Biozid-mischungen können die Spreitmittel dabei beispielsweise von 0,01 bis 20 Gew.-%, vorzugsweise von 0,1 bis 10 Gew.-%, besonders bevorzugt von 0,1 bis 5 Gew.-% und ganz besonders bevorzugt von 0,1 bis 2 Gew.-% enthalten sein.

- Duftstoffe und/oder Farbstoffe, wie beispielsweise anorganische Pigmente, zum Beispiel Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink. Bezogen auf die Biozidmischungen können die Duftstoffe und/oder Farbstoffe dabei beispielsweise jeweils von 0,001 bis 4 Gew.-%, vorzugsweise von 0,01 bis 1 Gew.-%, besonders bevorzugt von 0,01 bis 0,8 Gew.-% enthalten sein.

- Puffersubstanzen, Puffersysteme und/oder pH-Wert-Regulatoren. Bezogen auf die Biozidmischung können diese dabei beispielsweise jeweils von 0,01 bis 10 Gew.-%, vorzugsweise von 0,1 bis 5 Gew.-% enthalten sein.

- Verdickungsmittel, wie beispielweise Polysaccharide, Xanthan Gum, Natrium- oder Magnesium Silicate, Heteropolysaccharide, Alginate, Carboxymethylcellulose, Gummi Arabicum oder Polyacrylsäuren, bevorzugt Xanthan Gum. Bezogen auf die Biozidmischung können die Verdickungsmittel dabei beispielsweise jeweils von 0,01 bis 10 Gew.-%, vorzugsweise von 0,1 bis 5 Gew.-% enthalten sein.

- Entstaubungsmittel sind beispielsweise Polyglykole und Polyglykolether. Bezogen auf die Biozidmischungen können die Entstaubungsmittel dabei beispiels-weise jeweils von 0,01 bis 2 Gew.-%, vorzugsweise von 0,05 bis 1 Gew.-%, besonders bevorzugt von 0,1 bis 0,5 Gew.-% an Entstaubungsmitteln enthalten sein.

- Als Fließmittel und/oder Trennmittel können beispielsweise natürliche Gesteinsmehle, wie Kaoline, Tonerden, Talkum, Marmor, Kreide, Quarz, Bentonit, Smectit, Attapulgit, Montmorillonit oder Diatomeenerde oder synthetische an-organische Stoffe, wie hochdisperse Kieselsäure, Aluminiumoxid und Silikate enthalten, oder Mg-Salze von Fettsäuren oder Mischungen davon eingesetzt werden. Bezogen auf die Biozidmischungen können diese dabei jeweils von 0,01 bis 15 Gew.-%, vorzugsweise von 0,05 bis 8 Gew.-%, besonders bevorzugt von 0,1 bis 5 Gew.-% an Fließmittel und/oder Trennmittel enthalten sein.

- Gebindekonservierungsmittel sind beispielsweise Biozide, Bakterizide und Fungizide. Bezogen auf die Biozid-Mischungen können diese dabei beispielsweise jeweils von 0,01 bis 2 Gew.-%, vorzugsweise von 0,05 bis kleiner 1 Gew.-% an Gebindekonservierungsmittel enthalten sein.

Der Gesamtgehalt an Hilfsmittel, insbesondere an den oben genannten, bezogen auf die Biozidmischungen beträgt vorzugsweise von 0,001 bis 20 Gew.-%, bevorzugt von 0,1 bis 15 Gew.-% und besonders bevorzugt von 0,1 bis 10 Gew.-%.

Die erfindungsgemäße Biozidmischung kann in verschiedenen Formen vorliegen, beispiels-weise als feste Formulierungen, wie beispielsweise Pulvermischungen oder als Granulate, vorzugsweise wasserdispergierbare Granulate, die neben den Wirkstoffen der Komponenten a) und b) auch noch feste Hilfsmittel wie die oben genannten Fließmittel und/oder Trennmittel wie zum Beispiel natürliche Gesteinsmehle, wie Kaoline, Tonerden, Talkum, Marmor, Kreide, Quarz, Bentonit, Smectit, Attapulgit, Montmorillonit, oder Diatomeenerde oder synthetische anorganische Stoffe, wie hochdisperse Kieselsäure, Aluminiumoxid und Silikate oder Mischungen davon enthalten können.

Die festen Formulierungen können in an sich bekannter Weise beispielsweise durch innige Vermischung der Komponenten a) und b) in dem angegebenen Gewichtsverhältnis mit den vorzugsweise festen Hilfsmitteln und vorzugsweise anschließender gemeinsamen Zerkleinerung erhalten werden. Weiterhin können die festen Formulierungen durch Trocknung, beispielsweise Sprühtrocknung, einer flüssigen Formulierung erhalten werden.

Bevorzugte feste Formulierungen enthalten beispielsweise von 10 bis 100 Gew.-% der Komponenten a) und b) in dem angegebenen Gewichtsverhältnis, vorzugsweise von 15 bis 98 Gew.-%.

Die erfindungsgemäße Biozidmischung kann auch als flüssige Formulierung vorliegen, beispielsweise als Suspensionen, Dispersionen, Gele oder Pasten.

Bevorzugte flüssige Formulierungen sind wässrige Dispersionen. Die flüssigen, insbesondere wässrige Formulierungen der erfindungsgemäßen Biozidmischung enthalten im Allgemeinen von 2 bis 95 Gew.-%, vorzugsweise von 5 bis 75 Gew.-%, besonders bevorzugt von 5 bis 50 Gew.-% ganz besonders bevorzugt von 5 bis 35 Gew.-% der Komponenten a) und b). Weiterhin enthalten sie vorzugsweise weitere Hilfsstoffen, insbesondere die oben genannten in einer Menge von 0,001 bis 20 Gew.-%, bevorzugt von 0,1 bis 15 Gew.-% und besonders bevorzugt von 0,1 bis 10 Gew.-% und als Rest vorzugsweise Wasser.

Bevorzugte flüssige erfindungsgemäße Biozidmischungen sind dadurch gekennzeichnet, dass sie

- in Summe von 2 bis 95 Gew.-%, vorzugsweise von 5 bis 75 Gew.-%, insbesondere 5 bis 50 Gew.-% ganz besonders bevorzugt von 5 bis 35 Gew.-% der Komponenten a) und b),

- 0,001 bis 20 Gew.-%, bevorzugt von 0,1 bis 15 Gew.-% und besonders bevorzugt von 0,1 bis 10 Gew.-% wenigstens ein Hilfsmittel, vorzugsweise ein oder mehrere der oben genannten Hilfsmittel und

- als Rest Wasser enthalten.

Bevorzugt enthalten die erfindungsgemäßen Biozidmischungen in Form ihrer flüssigen Formulierung wenigstens 90 Vol.-% aller Feststoffteilchen in einer Partikelgröße von kleiner als 150 $\mu$m, bevorzugt kleiner als 100 $\mu$m, besonders bevorzugt kleiner als 50 $\mu$m und ganz besonders bevorzugt kleiner als 20 $\mu$m.

**Verfahren**

Die Erfindung betrifft auch ein Verfahren zur Herstellung der erfindungsgemäßen Biozidmischung, das dadurch gekennzeichnet ist, dass man

i) Biozide der Komponenten a) und b) vorzugsweise in Wasser mischt

ii) ggf. ein oder mehrere mit zu verwendenden Hilfsstoffe zugibt

iii) vorzugsweise mittels Scherkräften homogenisiert, ggf. zerkleinert, insbesondere bis wenigstens 90 Vol% der Feststoffteilchen in einer Partikelgröße von kleiner als 150 $\mu$m, bevorzugt kleiner als 100 $\mu$m , besonders bevorzugt kleiner als 50 $\mu$m und ganz besonders bevorzugt kleiner als 20 $\mu$m vorliegen

iv) und ggf. ein oder mehrere weitere mit zu verwendende Hilfsstoffe, insbesondere Verdicker und/oder Gebindekonservierungsmittel zugibt und

v) die erhaltene Dispersion ggf. trocknet.

In einer bevorzugten Verfahrensweise wird eine Flüssigkeit, vorzugsweise das Dispersionsmedium Wasser vorgelegt und die Komponenten a) und b) und ein Dispergiermittel sowie ggf. weitere Hilfsstoffe wie Benetzungsmittel, Entschäumer und/oder Gebindekonservierungsmittel zugegeben. Diese Mischung wird dann vorzugsweise mit einem Hochgeschwindigkeitsrührer homogenisiert. Als solche sind beispielsweise Dissolver oder Rotor Stator Systeme wie Ultraturrax, Dispermix, Dispermat, Hochdruckdispergatoren, axial durchströmte Düsenaggregate oder ähnliche dem Fachmann bekannte Systeme geeignet.

Anschließend wird die erhaltenen Dispersion vorzugsweise mit einer Mühle, insbesondere einer Kugel- oder Korbmühle behandelt, so dass vorzugsweise wenigstens 90 Vol.-% der Feststoffteilchen in einer Partikelgröße von kleiner als 150 $\mu$m, bevorzugt kleiner als 100 $\mu$m, besonders bevorzugt kleiner als 50 $\mu$m und ganz besonders bevorzugt kleiner als 20 $\mu$m vorliegen. Vor, während oder nach dem Mahlen wird vorzugsweise ein Verdicker zugegeben, um eine gewünschte Viskosität einzustellen.

Im Falle, dass die eingesetzten Feststoffe bereits eine entsprechende Teilchengröße besitzen kann eine Mahlung auch entfallen.

In einer bevorzugten Ausführungsform erfolgen die Schritte i) bis iv) des erfindungsgemäßen Verfahrens bei einer Temperatur in dem Bereich von 5 bis 40°C, insbesondere bei 10 bis 30°C, besonders bevorzugt bei einer Temperatur kleiner 30°C.

Die flüssigen Formulierungen wie insbesondere die wässrige Dispersionen lassen sich in an sich bekannter Weise beispielsweise dadurch herstellen, indem man die Komponenten a) und b) und die weiteren Hilfsstoffe, die in der flüssigen Formulierung enthalten sein sollen, gemeinsam zerkleinert oder die partikulären, Komponenten a) und b) und die weiteren Stoffe, die in der flüssigen Formulierung enthalten sein sollen, mittels eines Dissolvers oder Rührers innig miteinander vermischt.

**Beschichtungsmittel**

Die Erfindung betrifft auch Beschichtungsmittel enthaltend

- die erfindungsgemäße Biozidmischung oder
- die Komponenten a) und b) der erfindungsgemäßen Biozidmischung, wobei das Gew.-Verhältnis der Komponenten a) zu b) von 6:1 - 1: 6, vorzugsweise von 1,8:1 - 1:6, insbesondere von 1,5:1 - 1:6 beträgt
- wenigstens ein Bindemittel,
- ggf. Pigmente und/oder Farben und
- Wasser.

Bevorzugt enthält das erfindungsgemäße Beschichtungsmittel

- 0,1 bis 5 Gew.-%, insbesondere 0,3 bis 3 Gew.-%, vorzugsweise von 0,3 bis 2 Gew.-% der erfindungsgemäßen Biozidmischung oder,
- 0,02 - 5,0 Gew.-%, bevorzugt 0,1 - 1,5 Gew.-%, insbesondere bevorzugt 0,2 - 0,8 Gew.-% der Komponenten a) und b) der erfindungsgemäßen Biozidmischung, wobei das Gew.-Verhältnis der Komponenten a) zu b) von 6:1 - 1: 6, vorzugsweise von 1,8:1 - 1:6, insbesondere von 1,5:1 - 1:6 beträgt.

Der Anteil des Bindemittels im erfindungsgemäßen Beschichtungsmittel beträgt vorzugsweise von 5 bis 80 Gew.-%, insbesondere von 10 bis 60 Gew.-%.

Als bevorzugtes Bindemittel, wird ein vorzugsweise filmbildendes Bindemittel, insbesondere ein Acrylat-, Alkyd,-Urethan-, Styrol-, Vinylacetat-basiertes Bindemittel sowie Hybridsysteme aus diesen eingesetzt. Bevorzugt beträgt die Menge an Bindemittel von 10 bis 60 Gew.-% bezogen auf das Beschichtungsmittel.

Ebenfalls bevorzugt kann das erfindungsgemäße Beschichtungsmittel Löse- und/oder Dispergiermittel, ggf. Füllstoffe, ggf. Benetzungsmittel sowie ggf. andere Additive wie beispielsweise Entschäumer enthalten.

Ebenfalls kann das erfindungsgemäße Beschichtungsmittel weiterhin Lösungsmittel wie z. B. Glykole und Glykolether, Gebindekonservierungsmittel sowie optional weitere Additive, wie beispielsweise Entschäumer, Verdicker, Benetzungsmittel, Antiabsetzmittel, und Dispergiermittel enthalten. Als solche Hilfsmittel kommen beispielsweise die oben genannten in Frage.

Nicht-therapeutisches **Verfahren zum Hemmen oder Bekämpfen des Wachstums von Schimmelpilzen**

Die Erfindung betrifft auch ein nicht-therapeutisches Verfahren zum Hemmen oder Bekämpfen des Wachstums von Schimmelpilzen auf oder in Oberflächenbeschichtungen gefunden, dadurch gekennzeichnet, dass die Beschichtung durch Auftragen eines Beschichtungsmittels auf eine Oberfläche gebildet wird und das Beschichtungsmittel das erfindungsgemäße Beschichtungsmittel ist oder die erfindungsgemäße Biozidmischung enthält.

Als **Schimmelpilze,** vor denen das erfindungsgemäße Verfahren besonders effektiv schützt, sind vorzugsweise die Ascomyceten und Deuteromyceten zu nennen, insbesondere *Aspergillus niger, Aspergillus versicolor, Cladosporium cladosporides, Stachybotrys chartarum und Trichoderma virens.*

Die mit dem erfindungsgemäßen Verfahren zu schützenden Beschichtungen werden vorzugsweise durch Auftragen und Trocknen der Beschichtungsmittel auf eine Oberfläche vorzugsweise als geschlossener, auf der Oberfläche haftender, fester Film erhalten.

**Beispiele:**

**Beispiel 1: Herstellung von Azoxystrobin/IPBC-Dispersionen:**

Die Dispersionen wurden in dem Fachmann bekannter Art und Weise hergestellt.

**Herstellung einer Azoxystrobin/IPBC-Dispersion am Beispiel einer 1:1 Mischung:**

Es werden 327,6 g Wasser vorgelegt. Nacheinander werden 5 g eines EO/PO Blockcopolymer basierten Emulgators (Pluronic® F127 Prill, BASF), 7,5 g eines Polyvinylpyrrolidon-basierten Schutzkolloids (Sokalan® VA 64, BASF) und 5 g eines Polyacrylat-basierten Dispergiermittels (Dispex® AA4144, BASF) zugeben und homogenisiert.

Unter hohen Scherkräften (Dissolver) werden nacheinander 75 g Azoxystrobin und 75 g IPBC zugeben und homogenisiert. Während der Homogenisierung wird 1,63 g eines silikonbasierten Entschäumer (Xiameter Antifoam 1530) zugeben.

Die erhaltene Dispersion wird mit Hilfe einer Perlmühle (DynoMill Multilab) fein gemahlen, bis eine Teilchengröße (d90) von kleiner als 20 $\mu$m erreicht ist.

Anschließend werden 0,2% eines Gebindekonservierungsmittel (Preventol BIT 20D, 20%ige wässrige Dispersion) zugeben und es wird mit 0,45% Xanthan Gum angedickt. Es wurde eine Biozidmischung erhalten mit einem Gehalt der Wirkstoffe Azoxystrobin und IPBC von jeweils 15 Gew.-%.

Alle anderen Mischungen mit anderen Mischungsverhältnissen wurden ebenfalls nach dieser Vorschrift hergestellt.

**Beispiel 2: Vergleichende Wirksamkeit gegen Schimmelpilze**

Kresoxim-Methyl-Mischungen aus JP-A-2003073211 wurden direkt mit den entsprechenden erfindungsgemäßen AZO/IPBC-Mischungen hinsichtlich ihrer Wirksamkeit gegen Schimmelpilze verglichen (siehe Tabelle1).

Dafür wurden aus einer Kolonie des entsprechenden Schimmelpilzes Mycelstücke ausgestochen und auf einem Malzextrakt-haltigen Nähragar bei 26°C inkubiert. Hierbei wurde das Hyphenwachstum mit und ohne Wirkstoff verglichen. Als Minimale Hemmkonzentration (MHK) wurde die Konzentration angegeben, welche das radiale Hyphenwachstum völlig unterdrückt.

**Tabelle 1:**

| | | MHK (ppm) | | |
|---|---|---|---|---|
| | | **Cladosporium cladosporidos** | **Stachybotrys chartarum** | **Trichoderma virens** |
| AZO : IPBC | 1 : 1 | 2 | 1 | 2 |
| AZO : IPBC | 1 : 4 | 2 | 1 | 1 |
| Kresoxim-Methyl : IPBC | 1 : 1 | 5 | 5 | 5 |
| Kresoxim-Methyl : IPBC | 1 : 4 | 5 | 5 | 5 |

Aus der Gegenüberstellung gemäß Tabelle 1 ist die deutlich erhöhte Wirksamkeit der erfindungsgemäßen Biozidmischung gegenüber der Kresoxim-Methyl/IPBC Mischung aus der JP-A-2003073211 ersichtlich.

**Beispiel 3: Synergismus-Tests**

Aus einer Kolonie des entsprechenden Schimmelpilzes wurden Mycelstücke ausgestochen und auf einem Malzextrakt-haltigen Nähragar bei 26°C inkubiert. Hierbei wurde das Hyphenwachstum mit und ohne Wirkstoff verglichen. Als Minimale Hemmkonzentration (MHK) wurde die Konzentration angegeben, welche das radiale Hyphenwachstum völlig unterdrückt.

Nach der von Kull et al. (F.C. Kull, P.C. Eismann, H.D. Sylvestrowicz, R.L. Mayer, Applied Microbiology 1961, 9, 538-541) beschriebenen Methode wurde der Synergismus ermittelt. Dabei gelten folgende Beziehungen:

$$\frac{Q_A}{Q_a} + \frac{Q_B}{Q_b} = SI$$

SI = 1 bedeutet Additivität

SI > 1 bedeutet Antagonismus

SI < 1 bedeutet Synergismus

$Q_a$ = Konzentration von Substanz A, welche die MHK darstellt

$Q_b$ = Konzentration von Substanz B, welche die MHK darstellt

$Q_A$ = Konzentration von Substanz A in der Konzentration von A/B, die das Mikrobenwachstum unterbindet

$Q_B$ = Konzentration von Substanz B in der Konzentration von A/B, die das Mikrobenwachstum unterbindet

**3.1 Kombinationen von AZO und IPBC gegen die Schimmelpilze Aspergillus niger und Aspergillus versicolor**

**Tabelle 2:**

| | | MHK (ppm) | | SI | |
|---|---|---|---|---|---|
| | | **Aspergillus niger** | **Aspergillus versicolor** | **Aspergillus niger** | **Aspergillus versicolor** |
| AZO | | 5000 | 100 | | |
| AZO : IPBC | 6:1 | 5 | 1 | 0,70 | 0,15 |
| AZO : IPBC | 3:1 | 2 | 1 | 0,50 | 0,26 |
| AZO : IPBC | 2:1 | 2 | 1 | 0,66 | 0,34 |
| AZO : IPBC | 1:1 | 1 | 1 | 0,50 | 0,51 |
| AZO : IPBC | 1:2 | 1 | 1 | 0,67 | 0,67 |
| AZO : IPBC | 1:3 | 1 | 1 | 0,75 | 0,75 |
| AZO : IPBC | 1:6 | 1 | 1 | 0,86 | 0,86 |
| IPBC | | 1 | 1 | | |

Aus der Versuchsreihe gemäß Tabelle 2 ist die Synergie der erfindungsgemäßen Biozidmischung gegenüber den Einzelwirkstoffen bei verschiedenen Schimmelpilzen ersichtlich.

**3.2 Kombinationen von AZO und IPBC gegen den Schimmelpilz Trichoderma virens**

**Tabelle 3:**

| | MHK gegen Trichoderma virens (ppm) | SI |
|---|---|---|
| AZO | 1000 | |
| AZO: IPBC 2 : 1 | 5 | 0,83 |
| AZO: IPBC 1 : 1 | 2 | 0,50 |
| AZO: IPBC 1 : 2 | 1,5 | 0,50 |
| AZO: IPBC 1 : 3 | 1 | 0,38 |
| AZO : IPBC 1:6 | 1 | 0,43 |
| IPBC | 2 | |

Aus der Versuchsreihe gemäß Tabelle 3 ist die Synergie der erfindungsgemäßen Biozidmischung gegenüber den Einzelwirkstoffen bei verschiedenen Schimmelpilzen ersichtlich.

**3.3 Kombinationen von AZO und IPBC gegen den Schimmelpilz Cladosporium cladosporides**

**Tabelle 4:**

|  | MHK gegen Cladosporium cladosporides (ppm) | SI |
|---|---|---|
| AZO | 5 |  |
| AZO: IPBC 1 : 1 | 2 | 0,70 |
| AZO: IPBC 1 : 2 | 2 | 0,80 |
| AZO: IPBC 1 : 3 | 2 | 0,85 |
| AZO: IPBC 1:6 | 2 | 0,92 |
| IPBC | 2 |  |

Aus der Versuchsreihe gemäß Tabelle 4 ist die Synergie der erfindungsgemäßen Biozidmischung gegenüber den Einzelwirkstoffen bei verschiedenen Schimmelpilzen ersichtlich.

**3.4 Kombinationen von AZO und IPBC gegen den Schimmelpilz Stachybotrys chartarum**

**Tabelle 5:**

|  | MHK gegen Stachybotrys chartarum (ppm) | SI |
|---|---|---|
| AZO | 100 |  |
| AZO: IPBC 6 : 1 | 10 | 0,37 |
| AZO: IPBC 3 : 1 | 5 | 0,29 |
| AZO: IPBC 2 : 1 | 10 | 0,73 |
| AZO: IPBC 1 : 1 | 1 | 0,11 |
| AZO: IPBC 1 : 2 | 1 | 0,14 |
| AZO: IPBC 1 : 3 | 1 | 0,15 |
| AZO: IPBC 1: 6 | 1 | 0,17 |
| IPBC | 5 |  |

Aus der Versuchsreihe gemäß Tabelle 5 ist die Synergie der erfindungsgemäßen Biozidmischung gegenüber den Einzelwirkstoffen bei verschiedenen Schimmelpilzen ersichtlich.

**Beispiel 4: Schutz gegen Schimmelpilze eines Acrylat-Farbanstriches**

Eine wasserbasierte weiße Acrylatfarbe folgender Zusammensetzung (siehe Tabelle 6):

**Tabelle 6:**

| Bestandteil | % |
|---|---|
| $H_2O$ dest. | 16,00 |
| Propylenglykol (Lösungsmittel) | 1,00 |
| Foamex 845 (Entschäumer) | 0,60 |
| AMP 90 (Netzmittel) | 0,30 |
| Preventol BM 5 (Gebindekonservierungsmittel) | 0,30 |
| Edaplan 480 (Netz- und Dispergiermittel) | 0,70 |

(fortgesetzt)

| Bestandteil | % |
|---|---|
| Byk D 420 (Antiabsetzmittel) | 0,50 |
| Tronox R-KB-6 (Titandioxid; Pigment) | 20,00 |
| Alberdingk AC 2736 VP (Acrylat-Bindemittel) | 57,00 |
| Texanol (Lösungsmittel) | 1,00 |
| Byk 346 (Untergrund-Benetzungsmittel) | 0,50 |
| Acrysol RM 2020 E (Verdicker) | 1,60 |
| Acrysol RM 825 (Verdicker) | 0,50 |
| 100,00 | |

wurde mit der Kombination von 0,67 % der erfindungsgemäßen Biozidmischung bezogen auf die Anstrichfarbe aus Beispiel 1 (entspricht 0,1 % AZO und 0,1 % IPBC bezogen auf die Anstrichfarbe) ausgerüstet und im Vergleich zu der entsprechenden nicht ausgerüsteten Farbe nach der Testmethode British Standard BS 3900-Part G 6 (Test for Paints - Assessment of resistance to fungal growth) getestet.

Dabei wurden die Farben auf Kiefernholz gestrichen und danach die gestrichenen Prüfhölzer für 7 Tage bei 23°C konditioniert. Nach anschließender künstlicher Bewitterung (Bewitterungsgerät QUV der Fa. Q-Panel Lab Products) wurden die Prüfhölzer mit einer Schimmelpilzmischung inkubiert und 12 Wochen in einer Feuchtekammer bebrütet. Verwendet wurden folgende Schimmelpilze:

Aspergillus versicolor

Aureobasidium pullulans

Cladosporium cladosporides

Penicillum purpurogenum

Chaetomium globosum

Alternaria alternata

Phoma herbarum

Ulocladium atrum

Stachybotrys chartarum

Testergebnis nach 12 Wochen:

Die nicht fungizid ausgerüsteten Anstrich-Prüfkörper zeigten alle einen sehr hohen Befall von Schimmelpilzen (mehr als 70 % der Gesamtanstrichfläche befallen).

Die Prüfkörper, die mit der erfindungsgemäßen Biozidmischung (AZO/IPBC 1:1) ausgerüsteten Acrylfarbe gestrichen wurden, waren entweder völlig frei von Schimmelbefall oder zeigten nur sehr geringe Spuren eines Schimmelbefalls (kleiner als 0,5 % der Gesamtanstrichfläche befallen).

**Patentansprüche**

1. Biozidmischung, enthaltend die Biozide

   a) Azoxystrobin (Methyl-(E)-2-{2-[6-(2-cyanophenoxy)pyrimidin-4-yloxyl]phenyl}-3-methoxyacrylat) und
   b) IPBC (3-Iodpropynyl-N-butylcarbamat),

wobei das Gew.-Verhältnis der Komponenten a) zu b) von 6:1 -1: 6, vorzugsweise von 1,8:1 - 1:6, insbesondere von 1,5:1 - 1:6 beträgt.

2. Biozidmischung gemäß Anspruch 1, enthaltend die beiden Komponenten a) und b) in Summe zu mehr als 90 Gew.-%, insbesondere zu mehr als 95 Gew.-% und besonders bevorzugt zu mehr als 99 Gew.-%, bezogen auf die Summe aller Biozide.

3. Biozidmischung gemäß Anspruch 1 oder 2, **dadurch gekennzeichnet, dass** sie als flüssige, insbesondere wässrige Formulierung vorliegt, enthaltend in Summe 2 bis 95 Gew.-%, vorzugsweise von 5 bis 75 Gew.-%, besonders bevorzugt von 5 bis 50 Gew.-% ganz besonders bevorzugt von 5 bis 35 Gew.-% der Komponenten a) und b).

4. Biozidmischung gemäß wenigstens einem der Ansprüche 1 bis 3, **dadurch gekennzeichnet, dass** sie Hilfsstoffe, insbesondere grenzflächenaktive Stoffe, Entschäumer, Benetzungsmittel, Emulgatoren, Dispergiermittel, Stabilisatoren, Haftmittel, Schutzkolloide, Spreitmittel, Duftstoffe, Farbstoffe, Puffersubstanzen, Puffersysteme, pH-Wert-Regulatoren, Verdickungsmittel, Entstaubungsmittel, Fließmittel, Trennmittel, Gebindekonservierungsmittel oder Mischungen davon enthalten.

5. Biozidmischungen gemäß wenigstens einem der Ansprüche 1 bis 4, **dadurch gekennzeichnet, dass** sie

   - in Summe von 2 bis 95 Gew.-%, vorzugsweise von 5 bis 75 Gew.-%, insbesondere der Komponenten a) und b),
   - 0,001 bis 20 Gew.-%, bevorzugt von 0,1 bis 15 Gew.-% und besonders bevorzugt von 0,1 bis 10 Gew.-% wenigstens eines Hilfsmittels und
   - als Rest Wasser enthalten.

6. Biozidmischungen gemäß wenigstens einem der Ansprüche 1 bis 5, **dadurch gekennzeichnet, dass** sie

   - in Summe von 5 bis 50 Gew.-% ganz besonders bevorzugt von 5 bis 35 Gew.-% der Komponenten a) und b),
   - 0,001 bis 20 Gew.-%, bevorzugt von 0,1 bis 15 Gew.-% und besonders bevorzugt von 0,1 bis 10 Gew.-% wenigstens eines Hilfsmittels und
   - als Rest Wasser enthalten.

7. Verfahren zur Herstellung der Biozidmischung gemäß Anspruch 1, **dadurch gekennzeichnet ist, dass** man

   i) Biozide der Komponenten a) und b) vorzugsweise in Wasser mischt.

8. Beschichtungsmittel, enthaltend:

   - Biozidmischung gemäß wenigstens einem der Ansprüche 1 bis 6 oder
   - die Komponenten Komponenten a) und b) der Biozidmischung gemäß wenigstens einem der Ansprüche 1 bis 6, wobei das Gew.-Verhältnis der Komponenten a) zu b) von 6:1 - 1: 6, vorzugsweise von 1,8:1 - 1:6, insbesondere von 1,5:1 - 1:6 beträgt und
   - wenigstens ein Bindemittel,
   - ggf. Pigmente und/oder Farben und
   - Wasser.

9. Beschichtungsmittel gemäß Anspruch 8, enthaltend

   - 0,1 bis 5 Gew.-%, insbesondere 0,3 bis 3 Gew.-%, vorzugsweise von 0,3 bis 2 Gew.-% einer Biozidmischung gemäß wenigstens einem der Ansprüche 1 bis 6 oder,
   - 0,02 - 5,0 Gew.-%, bevorzugt 0,1 - 1,5 Gew.-%, insbesondere bevorzugt 0,2 - 0,8 Gew.-% der Komponenten a) und b)

      a) Azoxystrobin (Methyl-(E)-2-{2-[6-(2-cyanophenoxy)pyrimidin-4-yloxyl]phenyl}-3-methoxyacrylat) und
      b) IPBC (3-lodprogargyl-N-butylcarbamat),

   wobei das Gew.-Verhältnis der Komponenten a) zu b) von 6:1 -1: 6, vorzugsweise von 1,8:1 - 1:6, insbesondere von 1,5:1 - 1:6 beträgt.

**10.** Nicht-therapeutisches Verfahren zum Hemmen oder Bekämpfen des Wachstums von Schimmelpilzen auf oder in Oberflächenbeschichtungen, **dadurch gekennzeichnet, dass** die Beschichtung durch Auftragen eines Beschichtungsmittels auf eine Oberfläche gebildet wird und das Beschichtungsmittel ein Beschichtungsmittel gemäß Anspruch 8 oder 9 ist oder eine Biozidmischung gemäß wenigstens einem der Ansprüche 1 bis 6 enthält.

**Claims**

**1.** Biocide mixture comprising the biocides

    a) azoxystrobin (methyl (E)-2-{2-[6-(2-cyanophenoxy)pyrimidin-4-yloxy]phenyl}-3-methoxyacrylate) and
    b) IPBC (3-iodopropynyl N-butylcarbamate),

the weight ratio of components a) to b) being from 6:1-1:6, preferably from 1.8:1-1:6, in particular from 1.5:1-1:6.

**2.** Biocide mixture according to Claim 1, comprising the two components a) and b) at a total of more than 90% by weight, in particular of more than 95% by weight and particularly preferably of more than 99% by weight, based on the sum total of all biocides.

**3.** Biocide mixture according to Claim 1 or 2, **characterized in that** it is in the form of a liquid, in particular aqueous, formulation, comprising a total of 2% to 95% by weight, preferably from 5% to 75% by weight, particularly preferably from 5% to 50% by weight, very particularly preferably from 5% to 35% by weight, of components a) and b).

**4.** Biocide mixture according to at least one of Claims 1 to 3, **characterized in that** it comprises auxiliaries, in particular interface-active substances, defoamers, wetting agents, emulsifiers, dispersants, stabilizers, adhesives, protective colloids, spreading agents, fragrances, colorants, buffer substances, buffer systems, pH regulators, thickeners, dedusting agents, flow agents, release agents, in-can preservatives or mixtures thereof.

**5.** Biocide mixtures according to at least one of Claims 1 to 4, **characterized in that** they comprise

    - a total of from 2% to 95% by weight, preferably from 5% to 75% by weight, in particular of components a) and b),
    - 0.001% to 20% by weight, preferably from 0.1% to 15% by weight and particularly preferably from 0.1% to 10% by weight, of at least one auxiliary and
    - water as the balance.

**6.** Biocide mixtures according to at least one of Claims 1 to 5, **characterized in that** they comprise

    - a total of from 5% to 50% by weight, very particularly preferably from 5% to 35% by weight, of components a) and b),
    - 0.001% to 20% by weight, preferably from 0.1% to 15% by weight and particularly preferably from 0.1% to 10% by weight, of at least one auxiliary and
    - water as the balance.

**7.** Process for preparing the biocide mixture according to Claim 1, **characterized in that**

    i) biocides of components a) and b) are preferably mixed in water.

**8.** Coating composition comprising:

    - biocide mixture according to at least one of Claims 1 to 6 or
    - the components a) and b) of the biocide mixture according to at least one of Claims 1 to 6, the weight ratio of components a) to b) being from 6:1-1:6, preferably from 1.8:1-1:6, in particular from 1.5:1-1:6 and
    - at least one binder,
    - optionally pigments and/or paints and
    - water.

**9.** Coating composition according to Claim 8, comprising

- 0.1% to 5% by weight, in particular 0.3% to 3% by weight, preferably from 0.3% to 2% by weight, of a biocide mixture according to at least one of Claims 1 to 6 or
- 0.02%-5.0% by weight, preferably 0.1%-1.5% by weight, especially preferably 0.2%-0.8% by weight, of components a) and b),

a) azoxystrobin (methyl (E)-2-{2-[6-(2-cyanophenoxy)pyrimidin-4-yloxy]phenyl}-3-methoxyacrylate) and
b) IPBC (3-iodopropargyl N-butylcarbamate),

the weight ratio of components a) to b) being from 6:1-1:6, preferably from 1.8:1-1:6, in particular from 1.5:1-1:6.

10. Non-therapeutic process for inhibiting or controlling the growth of molds on or in surface coatings, **characterized in that** the coating is formed by applying a coating composition to a surface and the coating composition is a coating composition according to Claim 8 or 9 or comprises a biocide mixture according to at least one of Claims 1 to 6.

**Revendications**

1. Mélange de biocides, contenant les biocides

a) azoxystrobine ((E)-2-{2-[6-(2-cyanophénoxy)pyrimidine-4-yloxyl]phényl}-3-méthoxyacrylate de méthyle) et
b) IPBC (3-iodopropynyl-N-butylcarbamate),

le rapport en poids des composants a) à b) valant 6:1-1:6, de préférence 1,8:1-1:6, en particulier 1,5:1-1:6.

2. Mélange de biocides selon la revendication 1, contenant les deux composants a) et b), au total, à raison de plus de 90% en poids, en particulier de plus de 95% en poids et de manière particulièrement préférée de plus de 99% en poids, par rapport à la somme de tous les biocides.

3. Mélange de biocides selon la revendication 1 ou 2, **caractérisé en ce qu'**il se trouve sous forme de formulation liquide, en particulier aqueuse, contenant au total 2 à 95% en poids, de préférence 5 à 75% en poids, de manière particulièrement préférée 5 à 50% en poids, de manière tout particulièrement préférée 5 à 35% en poids des composants a) et b).

4. Mélange de biocides selon au moins l'une des revendications 1 à 3, **caractérisé en ce qu'**il contient des adjuvants, en particulier des substances tensioactives, des antimousses, des mouillants, des émulsifiants, des dispersants, des agents de stabilisation, des adhésifs, des colloïdes de protection, des agents d'épandage, des parfums, des colorants, des substances tampon, des systèmes tampon, des régulateurs du pH, des épaississants, des agents antipoussière, des fluidifiants, des agents de démoulage, des agents de conservation d'emballage ou leurs mélanges.

5. Mélanges de biocides selon au moins l'une des revendications 1 à 4, **caractérisés en ce qu'**ils contiennent

- au total 2 à 95% en poids, de préférence 5 à 75% en poids, en particulier des composants a) et b),
- 0,001 à 20% en poids, de préférence 0,1 à 15% en poids et de manière particulièrement préférée 0,1 à 10% en poids d'au moins un adjuvant et
- pour le reste de l'eau.

6. Mélanges de biocides selon au moins l'une des revendications 1 à 5, **caractérisés en ce qu'**ils contiennent

- au total 5 à 50% en poids, de manière tout particulièrement préférée 5 à 35% en poids des composants a) et b),
- 0,001 à 20% en poids, de préférence 0,1 à 15% en poids et de manière particulièrement préférée 0,1 à 10% en poids d'au moins un adjuvant et
- pour le reste de l'eau.

7. Procédé pour la préparation du mélange de biocides selon la revendication 1, **caractérisé en ce que** i) on mélange les biocides des composants a) et b) de préférence dans de l'eau.

8. Agent de revêtement, contenant :

- un mélange de biocides selon au moins l'une des revendications 1 à 6 ou
- les composants a) et b) du mélange de biocides selon au moins l'une des revendications 1 à 6, le rapport en poids des composants a) à b) valant 6:1-1:6, de préférence 1,8:1-1:6, en particulier 1,5:1-1:6 et
- au moins un liant,
- le cas échéant des pigments et/ou des peintures et
- de l'eau.

9. Agent de revêtement selon la revendication 8, contenant

- 0,1 à 5% en poids, en particulier 0,3 à 3% en poids, de préférence 0,3 à 2% en poids d'un mélange de biocides selon au moins l'une des revendications 1 à 6 ou
- 0,02-5,0% en poids, de préférence 0,1-1,5% en poids, en particulier de préférence 0,2-0,8% en poids des composants a) et b)

    a) de l'azoxystrobine ((E)-2-{2-[6-(2-cyanophénoxy)pyrimidine-4-yloxyl]phényl}-3-méthoxyacrylate de méthyle) et
    b) de l'IPBC (3-iodopropynyl-N-butylcarbamate),

le rapport en poids des composants a) à b) valant 6:1-1:6, de préférence 1,8:1-1:6, en particulier 1,5:1-1:6.

10. Procédé non thérapeutique destiné à inhiber ou à lutter contre la croissance de moisissures sur ou dans des revêtements de surface, **caractérisé en ce que** le revêtement est formé par application d'un agent de revêtement sur une surface et l'agent de revêtement contient un agent de revêtement selon la revendication 8 et/ou 9 ou un mélange de biocides selon au moins l'une des revendications 1 à 6.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4276211 A
- EP 431752 A

- JP 2003073211 A

**In der Beschreibung aufgeführte Nicht-Patentliteratur**

- **F.C. KULL ; P.C. EISMANN ; H.D. SYLVESTROWICZ ; R.L. MAYER.** *Applied Microbiology,* 1961, vol. 9, 538-541